# EUROPÄISCHE PATENTSCHRIFT

(11) **EP 1 768 828 B1**
(45) Veröffentlichungstag und Bekanntmachung des Hinweises auf die Patenterteilung: **17.06.2009**
(21) Anmeldenummer: 05747377.9
(22) Anmeldetag: 22.04.2005
(51) Int. Cl.: B29C 45/50, B29C 45/82

(54) **SPRITZGIESSMASCHINE**
INJECTION MOULDING MACHINE
MACHINE A MOULER PAR INJECTION

(30) Priorität: 09.07.2004 DE 102004033690
(43) Veröffentlichungstag der Anmeldung: 04.04.2007
(73) Patentinhaber: Sumitomo (SHI) Demag Plastics Machinery GmbH, 90571 Schwaig (DE)
(72) Erfinder: WESSELY, Ralph, 90559 Burgthann (DE); KÜBEL, Andreas, 91207 Lauf (DE); POPP, Hans-Jürgen, 91322 Gräfenberg (DE)
(74) Vertreter: Rau, Manfred
(86) Internationale Anmeldenummer: PCT/EP2005/051801
(87) Internationale Veröffentlichungsnummer: WO 2006/005638

(56) Entgegenhaltungen:
- EP-A- 1 287 968
- DE-A1- 10 243 248
- DE-C1- 19 680 008
- POPP H-J: "E-ANTRIEBE FUER SCHNECKE UND KNIEHEBEL" KUNSTSTOFFE, HANSER, MUNCHEN, DE, Bd. 88, Nr. 9, September 1998 (1998-09), Seiten 1384,1386,1389-1, XP000790484 ISSN: 0023-5563
- KAPFER M: "IM MASSANZUG VON DER STANGE" KUNSTSTOFFE, HANSER, MUNCHEN, DE, Nr. 9, 2003, Seiten 60-64, XP001156984 ISSN: 0023-5563
- SIEMENS: "Torque motors for a wide range of applications"[Online] 21. November 2002 (2002-11-21), Seiten 1-1, XP002340667 Nuremberg Gefunden im Internet: URL:http://www.siemens.com/index.jsp?sdc_p =pfs4n1031561dcmuo1041252l&> [gefunden am 2005-08-15]
- PAL S K: "Comparative study of the design and development of direct drive brushed and brushless DC motors with samarium cobalt, neodymium-iron-boron and ceramic magnets" MUIRHEAD VATRIC COMPONENTS LIMITED, 1993, Seiten 7-1, XP006520972
- WHITMORE C H: "VARIABLE-VOLUME PUMPS HIKE EFFICIENCY OF MOLDING MACHINES" PLASTICS ENGINEERING, SOCIETY OF PLASTICS ENGINEERS,INC. GREENWICH, CONN, US, Bd. 34, Nr. 9, September 1978 (1978-09), Seiten 25-27, XP001176205 ISSN: 0091-9578

## Beschreibung

Die vorliegende Erfindung betrifft eine Spritzgießmaschine gemäß den Merkmalen des Oberbegriffs des Anspruchs 1.

Spritzgießmaschinen mit solchen Einspritzeinheiten sind aus dem Stand der Technik bekannt, es war schon seit längerem üblich, für die Rotation der Schnecke zum Plastifizieren von zu verarbeitendem thermoplastischem Material einen elektrischen Antrieb vorzusehen, während für die Erzeugung von axialer Vorschubbewegung der Schnecke für einen Einspritzvorgang sowie für das Aufbringen von Gegen- und Nachdruck ein Hydraulikantrieb zum Einsatz kam.

Eine gattungsgemäße Spritzgießmaschine ist aus Popp H-J "E-Antriebe für Schnecke und Kniehebel", Kunststoffe, Carl Hanser Verlag , München, Band 88, Nr. 9, September 1998, Seiten 1384, 1386, 1389-1 ISSN: 0023-5563 bekannt. Darin wird eine Spritzgießmaschine mit einem Speicherhydrauliksystem beschrieben, welches für die Einspritzbewegung verwendet wird. Die Plastifizierschnecke wird rotatorisch über einen Zahnkettenantrieb angetrieben. Die Schließeinheit wird durch einen Servomotor unter Zwischenschaltung eines hydrostatischen Getriebes betrieben.

Eine weitere Spritzgießmaschine ist aus der EP 0 785 059 B1 bekannt, bei der ein elektrischer Antriebsmotor sowohl die Schneckenrotation bewirkt als auch eine Hydraulikpumpe antreibt, über die über einen Hydraulikkreis die axiale Bewegung der Schnecke gesteuert wird. Nachteilig heran ist, dass die Pumpe und der Motor starr gekoppelt sind, so dass ein an der Schnecke während des Plastifizierens auftretender Staudruck ein Drehmoment an der Pumpe hervorruft, das als Antriebsmoment an den Antriebsmotor weitergegeben wird. Hierdurch wird zwar Leistung zurückgewonnen, allerdings ist die Schneckenrotation nicht mehr unabhängig und punktgenau ansteuerbar, zudem muss ein Getriebe zwischen dem Antriebsmotor und der Schneckenwelle vorgesehen sein.

Auch aus der US 6,120,277 ist eine gattungsgemäße Spritzgießmaschine bekannt, wobei ein elektrischer Motor wiederum sowohl für das Dosieren, also die Rotationsbewegung der Schnecke, als auch zeitlich versetzt für das Antreiben einer Pumpe für die axiale Einspritzbewegung eingesetzt wird. Auch hieraus ergibt sich eine Abhängigkeit von Dosier- und Einspritzvorgang voneinander, da ein Motor beide Antriebe bedient. Nachteilig ist weiterhin, dass ein Getriebe vorgesehen werden muss, das die Drehbewegung des Motors in die für die Dosierbewegung benötigte Drehzahl umsetzt. Getriebe sind zudem im Betrieb wegen der Vielzahl an ineinandergreifenden Teilen sehr laut und wartungsintensiv, da die Teile durch die Relativbewegung stark beansprucht werden.

Die EP 1 287 968 A2 stellt ebenfalls eine Einspritzeinheit vor, bei der ein Servomotor für die Dosierbewegung der Schnecke vorgesehen ist, und eine Hydraulik den Einspritzvorgang bedient. Hierbei wird die Hydraulik von einer Pumpe mit variablem Ausstoß versorgt, die auch für die Versorgung anderer hydraulischer Aktuatoren vorgesehen ist, und deren maximale Ausgangsleistung für das Betreiben der jeweiligen Aktuatoren ausreicht. Nachteilig hieran ist, dass durch die Verwendung einer Pumpe, die gerade die Aktuatoren bedienen kann, keine besonders schnellen Bewegungen der hydraulischen Aktuatoren bewirkt werden können und somit auch keine hohen Anfahrgeschwindigkeiten realisierbar sind.

In der DE 102 43 248 ist eine Plastifizier- und Einspritzeinheit für eine Kunststoffspritzgießmaschine offenbart, bei der die Einspritzfunktion der Plastifiziereinheit hydraulisch, der Drehantrieb über einen Hydromotor realisiert ist.

Aufgabe der vorliegenden Erfindung ist es, eine Spritzgießmaschine umfassend eine Einspritz- sowie Schließeinheit vorzustellen, die leise im Betrieb, wartungsarm, klein bauend und leicht ist und insbesondere für Hochleistungsanwendungen mit hoher Dynamik geeignet ist. Insbesondere soll eine punktgenaue Ansteuerbarkeit der einzelnen Betriebsachsen, eine schnelle Betätigbarkeit sowohl der elektrischen wie auch der hydraulisch angetriebenen Einheiten sowie eine Unabhängigkeit der einzelnen Einheiten voneinander gegeben sein.

Diese Aufgabe wird durch eine Spritzgießmaschine mit den Merkmalen des Anspruchs 1 gelöst.

In den Unteransprüchen werden weitere vorteilhafte Ausgestaltungen einer erfindungsgemäßen Spritzgießmaschine vorgestellt.

Vorteilhaft an der erfindungsgemäßen Spritzgießmaschine ist einerseits das Vorsehen einer Einspritzeinheit, bei der als elektrischer Antrieb für die Dosierbewegung der Plastifizierschnecke mittels derer thermoplastisches Material plastifiziert wird, ein Direktantrieb zum Einsatz kommt. Solche Direktantriebe haben gegenüber herkömmlichen elektrischen Antrieben von Spritzgießmaschinen den Vorteil, dass sie im Betrieb sehr leise sind, da sie mit einer relativ geringen Teileanzahl im Vergleich zu den bislang üblichen, über ein Getriebe angekoppelten Elektromotoren auskommen. Zudem wird dadurch der Antrieb als solcher leichter und kann platzsparender gebaut werden und beispielsweise auf einem Einspritzschlitten, auf dem die Einspritzeinheit gegenüber einem Maschinenbett verfahrbar gelagert ist, untergebracht werden. Durch die einfachere Bauweise kann auch auf die bislang notwendige häufige Wartung verzichtet werden, da .bei Direktantrieben lediglich die Lager als solche verschleißen können, bei diesen aber bei weitem nicht dieselben Abnutzungserscheinungen auftreten wie bei der Vielzahl von relativ zueinander bewegten Teilen in Getrieben und somit die Wartungsstillstände sehr viel seltener sind. Auch muss anders als bei Getrieben kein separater Kühlkreislauf vorgesehen werden und keine Versorgung mit Getriebeöl, die Spritzgießmaschine wird kleiner, sauberer und leiser. Direktantriebe haben außerdem den Vorteil, dass sie genau ansteuerbar sind und somit gute Dosierzeiten ermöglichen.

Durch das Vorsehen eines Speicherhydrauliksystems für die Versorgung eines Hydraulikantriebs für eine Hubbewegung der Plastifizierschnecke kann andererseits eine Spritzgießmaschine bereitgestellt werden, die insbesondere für Hochleistungsanwendungen geeignet ist. Solche erfordern eine hohe Dynamik, wie sie von einfachen Hydrauliksystemen mit einer Pumpe, die den Hydraulikkreislauf mit Druck beaufschlagt, im allgemeinen nicht ermöglicht werden kann. Der Einsatz eines an sich bekannten Speicherhydrauliksystems mit einer Kombination von regelbarer Pumpe und Hydraulikspeicher gewährleistet, dass zum Einspritzzeitpunkt der Hydraulikantrieb mit einem ausreichenden Druck versorgt werden kann, um ein zeitgenaues und schnelles Einspritzen sicherzustellen, wie es in Hochleislungsanwendungen, die sehr zeitkritisch sind, benötigt wird.

Die Kombination eines kleinen, leichten und wartungsarmen Antriebs der Plastifizierschnecke mit einem entsprechenden Speicherhydrauliksystem ermöglicht es, hohe Einspritzzyklen zu erreichen.

Weiterhin weist die erfindungsgemäße Spritzgießmaschine eine Schließeinheit auf, die ebenfalls insbesondere für Hochleistungsanwendungen geeignet ist und die den Anforderungen an hohe Zykluszeiten mit schnellen Öffnungs- und Schließbewegungen einer von ihren Formaufspannplatten getragenen Form gerecht wird. Eine solche Schließeinheit ist vorteilhafterweise abgekoppelt von den anderen Einheiten und kann insbesondere auch mit andersartigen Einspritzeinheiten sehr vorteilhaft zum Einsatz kommen.

Die Schließeinheit kann eine fest auf einem Maschinenbett angeordnete Abstützplatte sowie eine relativ zu dieser bewegliche Formaufspannplatte aufweisen, die auf einem Maschinenbett gelagert ist. Die Relativbewegung kann durch einen von einem Spindeltrieb angetriebenen Kniehebeltrieb bewirkt werden.

Gemäß der vorliegenden Erfindung ist der Spindeltrieb von einem elektrischen Direktantrieb angetrieben. Durch die Verwendung nur weniger Teile ist er leicht montierbar. Er kann an der Abstützplatte angelenkt sein, oder aber auch in einer Aussparung in dieser vorgesehen sein, wodurch weiters eine platzsparende und kurzbauende Konstruktion der Schließeinheit möglich wird. Je nach relativer Anordnung von spindel und Spindelmutter des Spindeltriebs kann-auch der Einsatz von- einem Hohlwellenmotor angebracht sein, durch dessen Rotor die Spindel tauchen kann.

Besonders bevorzugt kann ein High-Torque-Direktantrieb mit präziser Ansteuerbarkeit für den Spindeltrieb der Schließeinheit - was insbesondere für die genaue Positionsbestimmung der beweglichen Formaufspannplatte wichtig ist - und hoher Momentendichte zum Einsatz kommen. Durch diesen lassen sich für Schnelllaufanwendungen wichtige schnelle Anfahr- und hohe Maximalgeschwindigkeiten erzielen.

Gemäß einer weiteren vorteilhaften Weiterbildung kann als Direktantrieb für die Drehbewegung der Plastifizierschnecke ein relativ langsam laufender High-Torque-Motor vorgesehen sein, der es ermöglicht, die erforderlichen Drehmomente in das zu plastifizierende Material einzubringen und so eine optimale Plastifizierleistung zu bringen. Solche High-Torque-Motoren haben aufgrund ihrer geringen Energieaufnahme bei gleicher Last im Vergleich zu üblichen Antrieben sehr gute Wirkungsgrade und können zudem eine hohe Dynamik gewährleisten, da sie kurze Hochlaufzeiten im Vergleich zu herkömmlichen Elektroantrieben aufweisen. Insbesondere bei Einsatz von Synchrontechnik lässt sich der Energieverbrauch weiter reduzieren, da ein geringerer Stillstandstrom gezogen wird.

Besonders bevorzugt kann bei einer Einspritzeinheit einer erfindungsgemäßen Spritzgießmaschine eine Abtriebswelle des Direktantriebs über eine Keilwelle drehfest aber axial verschieblich mit einem Einspritzkolben des Hydraulikantriebs verbunden sein. Dies stellt einen sehr kompakten Aufbau der Einspritzeinheit mit geringem Platzbedarf sicher. An dem Einspritzkolben kann direkt eine Welle der Plastifizierschnecke befestigt sein, so dass die von dem Hydraulikantrieb auf den Einspritzkolben übertragene Vorschubkraft entlang der Achse der Schnecke eingeleitet werden kann, ohne dass es zu Momenten kommt. Die Kopplung über eine Keilwelle gewährleistet einen einfachen Aufbau und gute Wartbarkeit.

Der Direktantrieb kann als Hohlwellenmotor ausgebildet sein, von dessen Hohlwelle die Keilwelle an ihrem dem Einspritzkolben abgewandten Seite aufgenommen und hier fest mit dieser und somit mit dem Rotor des Direktantriebs verbunden ist.

Der Einspritzkolben kann in einem Einspritzzylinder des Hydraulikantriebs drehbar und axial verschieblich gelagert sein. Entsprechende Abdichtungsmittel zwischen den Kammern des Hydraulikantriebs müssen vorgesehen werden, die eine volle Beweglichkeit bei gutem Abdichtverhalten sicherstellen.

Die Einspritzeinheit kann über einen Einspritzschlitten verschieblich auf einem Maschinenbett der Spritzgießmaschine gelagert und an eine Düsenplatte heranfahrbar sein.

Bevorzugt ist das Speicherhydrauliksystem der erfindungsgemäßen Spritzgießmaschine derart ausgelegt, dass verschiedene hydraulische Aktuatoren, die insbesondere als Kolben-Zylinder-Einheiten unterschiedlicher Größe und Form ausgestaltet sein können, von ihm gleichzeitig und/oder alternativ versorgt werden können. So können durch Vorsehen eines Speicherhydrauliksystems beispielsweise alle hydraulischen Antriebe versorgt werden, was einen kompakten Aufbau und eine sparsame Konstruktion gewährleistet.

Besonders vorteilhafterweise kann das Speicherhydrauliksystem derart ausgelegt sein, dass es für Schnelllaufanwendungen einsetzbar ist, wie sie im Bereich der Hochleistungsspritzgießmaschinen mit hoher Lastaufnahme, hohen Anforderungen an Antwortzeiten und Bewegungsgeschwindigkeit erforderlich sind. Dies kann durch eine entsprechende Auslegung des Systems, erfolgen und zwar in Abstimmung mit von einer entsprechend hierfür vorgesehenen Steuerung, einem geeigneten Antrieb für die Hydraulikpumpe und geeignet dimensioniertem Hydraulikspeicher, Zuführungsleitungen und entsprechend ansteuerbaren Ventilen, wobei insbesondere Proportionalventile zum Einsatz kommen können. Die durch ein derartiges Speicherhydrauliksystem erreichbaren Einspritzgeschwindigkeiten lassen sich mit elektrischen Antrieben, beispielsweise nach Art eines Spindeltriebs für Einspritzeinheiten schwerlich erreichen.

Insbesondere für Hochleistungsanwendungen mit ihren Anforderungen an die Dynamik der ganzen Spritzgießmaschine und ihrer verschiedenen zusammenspielenden Komponenten ist es von Vorteil, wenn das Speicherhydrauliksystem auch an sogenannten Nebenachsen zum Einsatz kommen und beispielsweise für die schnelle und präzise Betätigung von Auswerfereinheiten und/oder Kernzugeinheiten und/oder Düsenanpresseinheiten verwendet werden kann. Gerade bei solchen Schnelllaufanwendungen müssen alle an der Spritzgießmaschine vorkommenden Bewegungsvorgänge schnell durchgeführt und_präzise aufeinander abgestimmt werden können.

Besonders bevorzugt kann die Spindel des Spindeltriebs an der Schließeinheit axial fest angeordnet und insbesondere an einer Abtriebswelle des Direktantriebs angelenkt sein. Sie kann dann im Eingriff mit einer Spindelmutter stehen, die mit einem Kreuzkopf des Kniehebeltriebs verbunden ist. Dies hat den Vorteil, dass die drehbeschleunigte Spindel nur ein geringes Masseträgheitsmoment aufweist, und so besonders hohe Beschleunigungen des Spindeltriebs erreicht werden können.

Vorteilhafterweise kann der zum Einsatz kommende Spindeltrieb nach Art eines Planeten-Spindeltriebs ausgeführt sein, der besonders gute Laufeigenschaften aufweist. Aufgrund der Abwälzbewegung zwischen der Spindel und der Spindelmutter durch die zwischen diesen und im Eingriff mit beiden angeordneten Planeten erfährt ein solcher Spindeltrieb nur geringe Gleitreibung und somit schwachen Verschleiß, ist leise im Betrieb und weist insbesondere einen hohen Wirkungsgrad und starke Belastbarkeit auf.

Die Spindel des Spindeltriebs kann gemäß einer besonders bevorzugten Ausgestaltungsform der Schließeinheit speziell für Schnelllaufanwendungen ausgelegt sein. Hierbei kann sie eine Steigung ihres Gewindes aufweisen, die die von üblichen Spindeltrieben bekannten Steigungen, die meist im Bereich von 35 mm liegen, bei weitem übersteigt. Als vorteilhaft hat es sich erwiesen, eine Steigung zu wählen, die größer oder gleich 40 mm ist, und insbesondere in etwa 42 mm beträgt.

Um beste Ergebnisse für Schnelllaufanwendungen zu erzielen, kann auch der Direktantrieb speziell angepasst, und insbesondere mit erhöhter Drehzahl antreibbar sein. Solche Drehzahlen liegen im Bereich von 750 Umdrehungen pro Minute und darüber. Durch den Einsatz eines Direktantriebs kann trotz dieser hohen Drehzahlen ein leiser und wartungsarmer Antrieb der Schließeinheit der Spritzgießmaschine gewährleistet werden, verbunden mit platzsparender Ausführung und geringen Trockenlaufzeiten aufgrund hoher Beschleunigungen und Maximalgeschwindigkeiten.

Die erfindungsgemäße Spritzgießmaschine weist eine besonders für Hochleistungsanwendungen mit der erforderlichen hohen Dynamik geeignete Einspritzeinheit auf. Gemäß den erfindungsgemäßen Weiterbildungen wird allgemein eine Spritzgießmaschine vorgestellt, die gerade für solche Hochleistungsanwendungen vorteilhaft einsetzbar ist, und deren Bestandteile sowohl in Kombination als auch alleine in solchen zur Anwendung kommen können.

Durch das Vorsehen eines Speicherhydrauliksystems mit den genannten Eigenschaften für verschiedene Achsen einer Spritzgießmaschine mit hydraulischen Aktuatoren in Verbindung mit dem Einsatz von Direktmotoren für elektrisch angetriebene Achsen können alle Achsen der Spritzgießmaschine unabhängig voneinander schnell und präzise angesteuert werden, wobei diese Ansteuerung über eine Steuerung des Speicherhydrauliksystems und eine Steuerung der Sprifizgießramaschine noch besser aufeinander und die Erfordernisse von Schnelllaufanwendungen abstimmbar ist.

Eine Ausführungsform einer erfindungsgemäßen Spritzgießmaschine soll anhand der nachfolgenden Zeichnung noch näher erläutert werden.

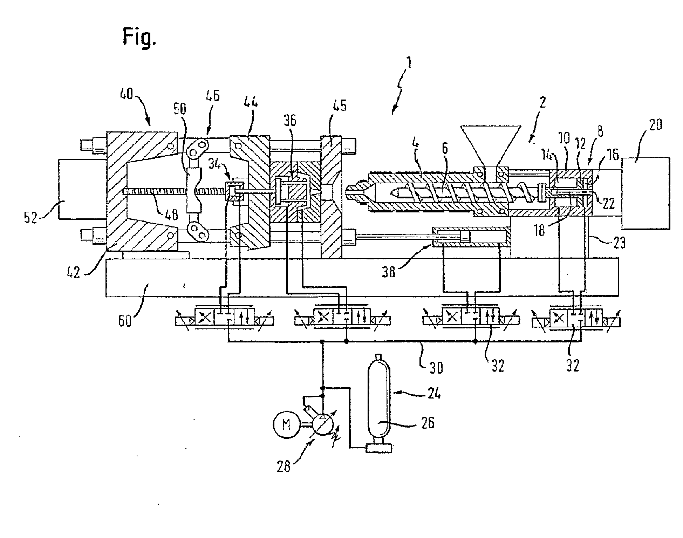

Die Zeichnung zeigt in stark schematisierter Form eine Spritzgießmaschine 1 mit einer Einspritzeinheit 2, die eine Plastifiziereinheit mit einem Plastifizierzylinder 4 aufweist, in dem eine Plastifizierschnecke 6 drehbar und axial verschieblich angeordnet ist. Des weiteren weist die Einspritzeinheit 2 einen Hydrauliktrieb in Form einer Kolben-Zylinder Einheit 8 auf, deren Einspritzkolben 12 axial verschieblich und drehbar in einem Einspritzzylinder 10 gelagert ist. Durch den Einspritzkolben 12 wird der Innenraum des Einspritzzylinders 10 im wesentlichen in eine erste und eine zweite Hydraulikkammer 14 und 16 aufgeteilt. Durch selektives Beaufschlagen der beiden Kammern 14, 16 mit Hydraulikfluid unter Druck wird eine axiale Bewegung des Einspritzkolbens 12 erzeugt.

Die Plastifizierschnecke 6 ist mit dem Einspritzkolben 12 fest verbunden, und wird durch ihn axial bewegt. Der Einspritzkolben 12 weist eine Aussparung auf, die derart ausgestaltet ist, dass eine Keilwelle 18 in sie eintauchen kann. Die Keilwelle 18 ist mit einer Abtriebswelle eines elektrischen Direktantriebs 20 fest verbunden. Durch die Keilwelle 18 wird eine Rotation der Abtriebswelle auf den Einspritzkolben 8 und über diesen auf die Plastifizierschnecke 6 übertragen.

Die Kolben-Zylinder-Einheit 8 der Einspritzeinheit 2 der Spritzgießmaschine 1 bzw. ihre Hydraulikkammern 14, 16 können über ein Speicherhydrauliksystem 24 mit Druck beaufschlagt werden. Das Speicherhydrauliksystem 24 umfasst eine regelbare Hydraulikpumpe 28 die von einem Motor antreibbar ist und weist einen Hydraulikspeicher 26 auf, in dem große Mengen an Hydraulikfluid unter Druck gespeichert und im Bedarfsfall schnell freigesetzt werden können. Hierzu sind Hydraulikspeicher 26 und Hydraulikpumpe 28 über Versorgungsleitungen 30 und ein schaltbares Ventil 32 mit den Kammern 14, 16 der Kolben-Zylinder-Einheit 8 verbindbar. Je nach Schaltstellung des Ventils 32 kann die Schnecke 6 von dem Direktantrieb 20 weg oder zu diesem hin verfahren, mit Druck beaufschlagt oder aber vom Speicherhydrauliksystem 24 unter Halten des jeweiligen Drucks abgekoppelt werden.

Die Einspritzeinheit 2 ist auf einem Einspritzschlitten 23 angeordnet, der auf einem Maschinenbett 60 der Spritzgießmaschine 1 verschieblich gelagert ist. Über eine hydraulisch betätigbare Düsenanpresseinheit 38, die von dem Speicherhydrauliksystem 24 versorgt wird, ist die Einspritzeinheit 2 an eine Schließeinheit 40 mit einer fest auf dem Maschinenbett 60 vorgesehenen Abstützplatte 42, einer relativ zu dieser beweglichen Formaufspannplatte 44 und einer festen Formaufspannplatte 45 heranfahrbar. An der Formaufspannplatte 45 kann sie an eine in dieser vorgesehene Düsenöffnung angepresst werden, über die plastifiziertes Material in eine Form eingespritzt werden kann.

Auch eine hydraulisch betätigbare Auswerfereinheit 34 und optional je nach Art der zu fertigenden Formteile in einer Form der Spritzgießmaschine vorgesehene, nicht näher dargestellte Kemzugeinheiten 36 können von dem Speicherhydrauliksystem 24 über Versorgungsleitungen 30 und Ventile 32 angetrieben werden.

Die Schließeinheit 40 der Spritzgießmaschine 1 weist einen Kniehebeltrieb 46 auf, der von einem Spindeltrieb betätigbar ist. Der Spindeltrieb umfasst eine Schnelllaufspindel 48, die mit einer nicht näher dargestellten Spindelmutter im Eingriff steht, die an einem Kreuzkopf 50 des Kniehebeltriebs 46 drehfest angelenkt ist. Die Schnelllaufspindel 48 ist mit einer Abtriebsachse eines Direktmotors 52 fest verbunden. Durch Rotation der Spindel 48 wird der Kreuzkopf 50 axial entlang der Spindel 48 bewegt, und so der Kniehebeltrieb 46 betätigt, wodurch die bewegliche Formaufspannplatte 44 von der festen Formaufspannplatte 45 weg und auf sie hin bewegt und so die Form geöffnet und geschlossen wird.

Im Betrieb der Spritzgießmaschine 1 sind alle. Betätigungsachsen, d.h. alle Achsen, entlang derer lineare oder rotatorische Bewegungen ausgeführt werden können, unabhängig voneinander, schnell und präzise ansteuerbar. Hierdurch können alle Bewegungen sehr genau aufeinander abgestimmt und in kürzesten Zeiträumen durchgeführt werden. Das Speicherhydrauliksystem kann in Phasen, in denen es keine hydraulischen Antriebe versorgen muss, den Speicher auffüllen und mit Druck beaufschlagen.

Durch das Vorsehen von Direktmotoren für die elektrischen Antriebe und von einem Speicherhydrauliksystem zum Antreiben der hydraulischen Komponenten kann eine sehr schnelle Beschleunigung entlang der einzelnen Achsen erzielt werden, so dass sich eine solche Spritzgießmaschine als Hochleistungsmaschine insbesondere für Schnelllaufanwendungen anbietet.

### Bezugszeichenliste

- 1: Spritzgießmaschine
- 2: Einspritzeinheit
- 4: Schneckenzylinder
- 6: Plastifizierschnecke
- 8: Kolben-Zylinder-Einheit
- 10: Einspritzzyfinder
- 12: Einspritzkolben
- 14: erste Hydraulikkammer
- 16: zweite Hydraulikkammer
- 18: Keilwelle
- 20: Direktantrieb
- 22: Abtriebswelle
- 23: Einspritzschlitten
- 24: Speicherhydrauliksystem
- 26: Hydraulikspeicher
- 28: Hydraulikpumpe
- 30: Versorgungsleitungen
- 32: Proportionalventile
- 34: Auswerfereinheit
- 36: Kernzugeinheit
- 38: Düsenanpresseinheit
- 40: Schließeinheit
- 42: Abstützplatte
- 44: bewegliche Formaufspannplatte
- 45: feste Formaufspannplatte
- 46: Kniehebeltrieb
- 48: Spindel
- 50: Kreuzkopf
- 52: Direktantrieb
- 60: Maschinenbett

## Patentansprüche

1. Spritzgießmaschine
- mit einer Einspritzeinheit (2) umfassend
-- eine in einem Plastifizierzylinder (4) drehbar und axial verschieblich gelagerte Plastifizierschnecke (6),
-- einen elektrischen Antrieb (20) für eine Drehbewegung der Plastifizierschnecke (6) zum Plastifizieren von thermoplastischem Material,
-- einen Hydraulikantrieb (8) für eine Hubbewegung der Plastifizierschnecke (6), wobei für den Hydraulikantrieb (8) ein Speicherhydrauliksystem (24) umfassend eine regelbare Pumpe (28) in Kombination mit einem Hydraulikspeicher (26) vorgesehen ist, und
- mit einer Schließeinheit (40), die einen Kniehebeltrieb (46) zum Bewegen einer beweglichen Formaufspannplatte (44) relativ zu einer ortsfesten Abstützplatte (42) aufweist sowie
-- einen Spindeltrieb (48) zum Antreiben des Kniehebeltriebs (46),
**dadurch gekennzeichnet, dass**
sowohl als elektrischer Antrieb für eine Drehbewegung der Plastifizierschnecke (6) als auch zum Antreiben des Spindeltriebs (48) jeweils ein Direktantrieb (20, 52) vorgesehen sind.

2. Spritzgießmaschine nach Anspruch 1,
**dadurch gekennzeichnet, dass**
als Direktantrieb (20, 52) ein High-Torque-Motor vorgesehen ist.

3. Spritzgießmaschine nach Anspruch 1 oder 2,
**dadurch gekennzeichnet, dass**
eine Abtriebswelle des Direktantriebs (20) für eine Drehbewegung der Plastifizierschnecke (6) über eine Keilwelle (18) drehfest und axial verschieblich mit einem Einspritzkolben (12) des Hydraulikantriebs (8) verbunden ist.

4. Spritzgießmaschine nach Anspruch 3,
**dadurch gekennzeichnet, dass**
der Direktantrieb (20) für eine Drehbewegung der Plastifizierschnecke (6) als Hohlwellenmotor ausgestaltet ist, und die Keilwelle (18) an ihrem dem Einspritzkolben (12) abgewandten Ende in der Hohlwelle des Hohlwellenmotors aufgenommen und mit dieser verbunden ist.

5. Spritzgießmaschine nach Anspruch 3 oder 4,
**dadurch gekennzeichnet, dass**
der Einspritzkolben (12) in einem Einspritzzylinder (10) des Hydraulikantriebs (8) drehbar und axial verschieblich gelagert ist.

6. Spritzgießmaschine nach einem der Ansprüche 1 - 5,
**dadurch gekennzeichnet, dass**
die Einspritzeinheit (2) auf einem Einspritzschlitten (23) angeordnet ist, der auf einem Maschinenbett (60) verschieblich gelagert ist.

7. Spritzgießmaschine nach Anspruch 6,
**dadurch gekennzeichnet, dass**
eine Auswerfereinheit (34) und/oder eine Kernzugeinheit (36) und/oder eine Düsenanpresseinheit (38) vorgesehen sind und das Speicherhydrauliksystem (24) auch zum Versorgen dieser Einheiten ausgelegt ist.

8. Spritzgießmaschine nach einem der Ansprüche 1 - 7,
**dadurch gekennzeichnet, dass**
der Direktantrieb (52) zum Antreiben des Spindeltriebes (48) an oder in der Abstützplatte (42) befestigt ist.

9. Spritzgießmaschine nach einem der Ansprüche 1 bis 8,
**dadurch gekennzeichnet, dass**
die Spindel (48) des Spindeltriebs drehfest mit dem Rotor des Direktantriebs (52) verbunden ist.

10. Spritzgießmaschine nach einem der Ansprüche 1 bis 9,
**dadurch gekennzeichnet, dass**
der Spindeltrieb (48) als Planeten-Spindeltrieb ausgeführt ist.

11. Spritzgießmaschine nach einem der Ansprüche 1 - 10,
**dadurch gekennzeichnet, dass**
die Spindel (48) des Spindeltriebs als Schnelllaufspindel mit hoher Steigung ausgelegt ist, wobei die Steigung im Bereich von größer 40 mm liegt und insbesondere in etwa 42 mm beträgt.

12. Spritzgießmaschine nach einem der Ansprüche 1 - 11,
**dadurch gekennzeichnet, dass**
der Direktantrieb (52) des Spindeltriebs (48) derart ausgelegt ist, dass er mit einer Drehzahl im Bereich von über 750 Umdrehungen pro Minute antreibbar ist.

## Claims

1. Injection molding machine
- with an injection unit (2) comprising
-- a plasticizing screw (6) which is mounted in such a way that it can be axially displaced and rotated in a plasticizing cylinder (4),
-- an electric drive (20) for generating a rotational movement of the plasticizing screw (6) for plasticizing thermoplastic material,
-- a hydraulic drive (8) for generating a reciprocating motion of the plasticizing screw, wherein an accumulator hydraulic system (24) comprising a regulatable pump (28) combined with a hydraulic accumulator (26) is provided as the hydraulic drive (8), and
- a clamping unit (40) having a toggle mechanism (46) for moving a movable platen (44) in relation to a stationary support platen (42) as well as
-- a spindle mechanism (48) for operating the toggle mechanism (46),
**characterized in that**
a direct drive (20, 52) is in each case an electric drive for generating a rotation of the plasticizing screw (6) and for driving the spindle mechanism (48).

2. Injection molding machine according to claim 1,
**characterized in that**
a high-torque-motor is provided as direct drive (20, 52).

3. Injection molding machine according to claim 1 or 2,
**characterized in that**
for generating a rotation of the plasticizing screw (6) an output shaft of the direct drive (20), via a spline shaft (18), is connected in fixed rotative engagement with and axially displaceably connected to the injection plunger (12) of the hydraulic drive (8).

4. Injection molding machine according to claim 3,
**characterized in that**
for generating a rotation of the plasticizing screw the direct drive (20) is constructed in the form of a hollow-shaft motor, and that the spline shaft (18), at its plunger-distal end, is received in and connected to the hollow shaft of the hollow-shaft motor.

5. Injection molding machine according to claim 3 or 4,
**characterized in that**
the injection plunger (12) is supported for rotation and displacement in axial direction in an injection cylinder (10) of the hydraulic drive (8).

6. Injection molding machine according to one of claims 1-5,
**characterized in that**
the injection unit (2) is attached to an injection carriage (23), said carriage being movably supported on a machine bed (60).

7. Injection molding machine according to claim 6,
**characterized in that**
an ejector unit (34) and/or a core puller unit (36) and/or a nozzle advance unit (38) is provided and that the accumulator hydraulic system (24) is constructed for supplying these units.

8. Injection molding machine according to one of claims 1-7,
**characterized in that**
the direct drive (52) for driving the spindle mechanism (48) is mounted on or integrated in the support platen (42).

9. Injection molding machine according to one of claims 1 to 8,
**characterized in that**
the spindle (48) of the spindle mechanism is connected in fixed rotative engagement with the rotor of the direct drive (52).

10. Injection molding machine according to one of claims 1 to 9,
**characterized in that**
the spindle mechanism (48) is constructed in the form of a planetary spindle mechanism.

11. Injection molding machine according to one of claims 1-10,
**characterized in that**
the spindle (48) of the spindle mechanism is constructed in the form of a high-speed spindle with a high pitch, wherein the pitch is in a range of greater than 40 mm, particularly approximately 42 mm.

12. Injection molding machine according to one of claims 1-11,
**characterized in that**
the direct drive (52) of the spindle mechanism (48) is constructed such that it is drivable at a rotation speed in a range of more than 750 revolutions per minute.

## Revendications

1. Machine à mouler par injection
- avec une unité d'injection (2) comprenant
- une vis de plastification (6) logée dans un cylindre de plastification (4) de manière rotative et axialement mobile,
- un entraînement électrique (20) pour un mouvement rotatif de la vis de plastification (6) servant à la plastification de matériau thermoplastique,
- un entraînement hydraulique (8) pour un mouvement de levée de la vis de plastification (6), un système hydraulique à accumulation (24) comprenant une pompe réglable (28) combinée à un accumulateur hydraulique (26) étant prévu pour l'entraînement hydraulique (8) et
- avec une unité de fermeture (40), qui présente une transmission à genouillère (46) servant à déplacer une plaque d'ablocage de moule (44) mobile par rapport à la plaque d'appui (42) fixe ainsi que
- une transmission à broche (48) servant à entraîner la transmission à genouillère (46),
**caractérisée en ce**
**que** respectivement un entraînement direct (20, 52) est prévu aussi bien comme entraînement électrique pour un mouvement rotatif de la vis de plastification (6) que pour l'entraînement de la transmission à broche (48).

2. Machine à mouler par injection selon la revendication 1,
**caractérisée en ce**
**qu'**un moteur à couple élevé est prévu comme entraînement direct (20, 52).

3. Machine à mouler par injection selon la revendication 1 ou 2,
**caractérisée en ce**
**qu'**un arbre de sortie de l'entraînement direct (20) pour un mouvement rotatif de la vis de plastification (6) est relié à un piston d'injection (12) de l'entraînement hydraulique (8) de manière solidaire en rotation et axialement mobile par le biais d'un arbre cannelé (18).

4. Machine à mouler par injection selon la revendication 3,
**caractérisée en ce**
**que** l'entraînement direct (20) pour un mouvement rotatif de la vis de plastification (6) est réalisé sous forme de moteur à arbre creux et l'arbre cannelé (18) est reçu au niveau de son extrémité opposée au piston d'injection (12) dans l'arbre creux du moteur à arbre creux et relié à celui-ci.

5. Machine à mouler par injection selon la revendication 3 ou 4,
**caractérisée en ce**
**que** le piston d'injection (12) est logé dans un cylindre d'injection (10) de l'entraînement hydraulique (8) de manière rotative et axialement mobile.

6. Machine à mouler par injection selon l'une quelconque des revendications 1 à 5,
**caractérisée en ce**
**que** l'unité d'injection (2) est agencée sur un chariot d'injection (23) qui est monté de manière mobile sur un socle de machine (60).

7. Machine à mouler par injection selon la revendication 6,
**caractérisée en ce**
**qu'**une unité d'éjection (34) et/ou une unité tire-noyau (36) et/ou une unité d'application de buse (38) sont prévues et le système hydraulique à accumulation (24) est aussi conçu pour alimenter ces unités.

8. Machine à mouler par injection selon l'une quelconque des revendications 1 à 7,
**caractérisée en ce**
**que** l'entraînement direct (52) servant à l'entraînement de la transmission à broche (48) est fixé au niveau ou dans la plaque d'appui (42).

9. Machine à mouler par injection selon l'une quelconque des revendications 1 à 8,
**caractérisée en ce**
**que** la broche (48) de la transmission à broche est reliée de manière solidaire en rotation au rotor de l'entraînement direct (52).

10. Machine à mouler par injection selon l'une quelconque des revendications 1 à 9,
**caractérisée en ce**
**que** la transmission à broche (48) est réalisée sous forme de transmission à broche planétaire.

11. Machine à mouler par injection selon l'une quelconque des revendications 1 à 10,
**caractérisée en ce**
**que** la broche (48) de la transmission à broche est conçue sous forme de broche rapide à pas élevé, le pas se trouvant dans une plage supérieure à 40 mm et est en particulier d'environ 42 mm.

12. Machine à mouler par injection selon l'une quelconque des revendications 1 à 11,
**caractérisée en ce**
**que** l'entraînement direct (52) de la transmission à broche (48) est conçu de telle sorte qu'il peut être entraîné avec une vitesse de rotation située dans une plage supérieure à 750 tours par minute.
